# EUROPEAN PATENT APPLICATION

(11) **EP 1 347 022 A1**
(43) Date of publication of application: **24.09.2003**
(21) Application number: 03075688.6
(22) Date of filing: 10.03.2003
(51) Int. Cl.: C09D 11/00

(54) **Inkjet ink composition**

(30) Priority: 21.03.2002 US 103075
(71) Applicant: EASTMAN KODAK COMPANY, Rochester, New York 14650 (US)
(72) Inventor: Chen, Huijuan Diana, c/o Eastman Kodak Company, Rochester, New York 14650-2201 (US); Teegarden, David M., c/o Eastman Kodak Company, Rochester, New York 14650-2201 (US); Blease, James West, c/o Eastman Kodak Company, Rochester, New York 14650-2201 (US)
(74) Representative: Weber, Etienne Nicolas

(57) **Abstract**

This invention relates to an inkjet ink composition comprising water, a water soluble dye and a water-dispersible sulfonated polyester ionomer containing sulfonated groups in the range of 5 to 40 mol % of the total polyester.

## Description

### FIELD OF THE INVENTION

This invention relates to an inkjet ink composition comprising a water soluble dye and a water dispersible sulfonated polyester ionomer. Such an inkjet composition provides improved image stability to light and other environmental contaminants such as ozone.

### BACKGROUND OF THE INVENTION

Inkjet printing is a non-impact method for producing images by the deposition of ink droplets in a pixel-by-pixel manner to an image-recording element in response to digital signals. There are various methods which may be utilized to control the deposition of ink droplets on the image-recording element to yield the desired image. In one process, known as continuous inkjet, a continuous stream of droplets is charged and deflected in an imagewise manner onto the surface of the image-recording element, while unimaged droplets are caught and returned to an ink sump. In another process, known as drop-on-demand inkjet, individual ink droplets are projected as needed onto the image-recording element to form the desired image. Common methods of controlling the projection of ink droplets in drop-on-demand printing include piezoelectric transducers and thermal bubble formation. Inkjet printers have found broad applications across markets ranging from industrial labeling to short run printing to desktop document and pictorial imaging.

The inks used in the various inkjet printers can be classified as either dye-based or pigment-based. A dye is a colorant which is dissolved or dispersed in the carrier medium. A pigment is a colorant that is insoluble in the carrier medium, but is dispersed or suspended in the form of small particles, often stabilized against flocculation and settling by the use of dispersing agents. The carrier medium can be a liquid or a solid at room temperature in both cases. Commonly used carrier media include water, mixtures of water and organic co-solvents and high boiling organic solvents, such as hydrocarbons, esters, ketones, etc.

In traditional dye-based inks, no particles are observable under the microscope. Although there have been many recent advances in the art of dye-based inkjet inks, such inks still suffer from deficiencies such as low optical densities on plain paper and poor lightfastness. When water is used as the carrier, such inks also generally suffer from poor water fastness and poor smear resistance. Ozone, which is particularly a problem, is generally present in the air at sea level at concentration of about 10 to 50 parts per billion. Under certain conditions, the ozone concentration may exceeds those levels. However, even at the lower ozone concentration, dyes such as inkjet dyes can be very sensitive and fade significantly when the air permeability of the ink receiver is high.

These problems can be minimized by replacing the dyes used in ink formulations with insoluble pigments. In general, pigments are superior to dyes with respect to waterfastness, lightfastness, and stability towards pollutants in the air. However, the pigment inks tend to be unstable and settle out from the liquid vehicle over a long storage time. Pigment inks also have a tendency to clog the orifices of the print head resulting in deterioration of print quality.

JP 08-259863A relates to an inkjet ink composition comprising a water-soluble dye and a polyester . In this publication, a variety of polyester ionomers which are able to form aspherical particles with different Tg, ionic groups, and molecular weight were disclosed. However, there is no differentiation and teaching in terms of the effect of the ionic components to image stability especially towards ozone.

Accordingly, there is still a need for inkjet inks having the advantages of dye-based inks while retaining the good lightfastness and stability towards pollutants such as found in pigment based inks.

### SUMMARY OF THE INVENTION

This invention provides an inkjet ink composition comprising water, a water soluble dye, and a water-dispersible sulfonated polyester ionomer containing sulfonated groups in the range of 5 to 40 mol % of the total polyester. It has been found that such inkjet ink compositions give improved image stability towards light and other environmental contaminants such as ozone while retaining all the other advantages of water soluble dye based inks.

### DETAILED DESCRIPTION OF THE INVENTION

The inkjet ink composition of the invention comprises water, a water soluble dye, and a water-dispersible sulfonated polyester ionomer containing sulfonated groups in the range of 5 to 40 mol % of the total polyester. A broad range of water-soluble dyes can be used in this invention. Examples of a water soluble dye include a reactive dye, direct dye, anionic dye, acid dye, basic dye, phthalocyanine dye, methine or polymethine dye, merocyanine dye, azamethine dye, azine dye, quinophthalone dye, thiazine dye, oxazine dye, anthraquinone, a metal-complex dye, or dyes as disclosed in U.S. Patent 5,973,026. In a preferred embodiment of the invention, the water-soluble dye may be an anionic dye.

In another preferred embodiment of the invention, anionic dyes which may be used include a mono or poly azo dye, such as a pyrazoleazoindole dye as disclosed in European Publication No. 1 197 535; a metal-complex dye, such as the transition metal complexes as disclosed in U.S. Patents 5,997,622 and 6,001,161; i.e., a transition metal complex of an 8-heterocyclylazo-5-hydroxyquinoline; phthalocyanine dyes such as C. I. Direct Blue 199; C. I. Direct Blue 307; Reactive Black 31, Reactive Red 31, anthraquinone dyes, or anthrapyridone dyes, as disclosed, for example, in U.S. Patent 6,152,969; EP 1,063,268; EP 1,067,155; WO 00/23440; WO 01/18123; JP 2000-256587; and JP 2001-072884. In a preferred embodiment, the anthrapyridone dye is a sulfonic acid or sulfonate derivative of a compound represented by the general formula: 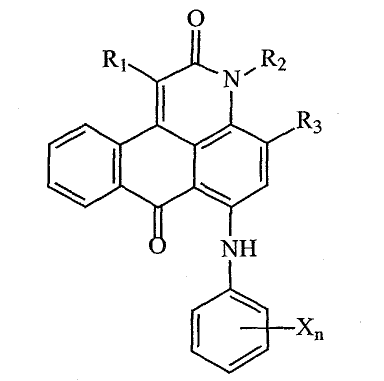 wherein:
R₁ represents hydrogen, or a substituted or unsubstituted alkoxycarbonyl, carboxyl, benzoyl, alkyl, aryl, hetaryl, alkoxy or phenoxy group;
R₂ represents hydrogen or a substituted or unsubstituted alkyl, alicyclic, aryl or hetaryl group;
R₃ represents hydrogen, carboxyl, or a substituted or unsubstituted alkyl, alicyclic, aryl, hetaryl, alkoxy or phenoxy group;
each X independently represents hydrogen, halogen, nitro, hydroxyl, carboxyl, or a substituted or unsubstituted alkyl, alicyclic, aryl, hetaryl, alkoxy, phenoxy, amino, amido or sulfonamido group; and
n represents 0, 1, 2 or 3.

In a preferred embodiment of the invention, R₁ in the above formula is benzoyl. In another preferred embodiment, R₂ is hydrogen. In yet another preferred embodiment, R₃ is a sulfonated phenoxy group. In yet still another preferred embodiment, n is 1 and X is a sulfonate group. A preferred anthrapyridone dye which can be used in the invention is sold commercially as JPD Magenta EK-1 Liquid, from Nippon Kayaku Kabushiki Kaisha as an approximately 10% solution in water. The dye used in the inkjet ink of the invention is present in any effective amount, generally from about 0.1 to about 10% by weight, and preferably from about 0.5% to about 6% by weight.

The inkjet ink containing the water-dispersible polyester employed in the invention consists of water as a continuous phase and polyester ionomer as a dispersed phase. The water-soluble dye and the water dispersible polyester are present in the ink so that the water-soluble dye and the water dispersible polyester ionomer exist either individually or are physically mixed. In a preferred embodiment of the invention, the polyester meets the following test: At 25° C, the polyester must: (a) be capable of forming a stable dispersion with water at a concentration of from 0.2 to 50 percent by weight, preferably 1 to 20 percent by weight, and (b) when 100 ml of the dispersion is then mixed in an equal volume of the water-miscible organic solvent described above, stirred and allowed to stand for 10 minutes exhibit no observable coagulation of the polyester dispersion. In general, the polyester dispersion should have an average particle size of < 1 µm, preferably < 0.5 µm, more preferably < 0.05 µm.

The water-dispersible polyester ionomers used in this invention are sulfonated polyester ionomers containing sulfonated groups in the range of 5 to 40 mol % of the total polyester. They are substantially hydrophobic, amorphous thermoplastic polymers in which ionic groups or moieties are present in sufficient concentration to provide water dispersibility. The polyester ionomers useful in the invention comprise dicarboxylic acid recurring units typically derived from dicarboxylic acids or their functional equivalents and diol recurring units typically derived from diols or their functional equivalents. Compounds which are functional equivalents of dicarboxylic acids include dicarboxylic acid chlorides, dicarboxylic acid esters, acid anhydrides and other compounds known to those skilled in the art which will react in standard procedures to provide a polyester. Compounds which are functional equivalents of diols include metal alkoxides, bisphenols, and other compounds known to those skilled in the art which will react in standard procedures to provide a polyester. The sulfonated ionic moieties can be provided by either ionic diol recurring units and/or ionic dicarboxylic acid recurring units, but preferably the latter. Sulfonic acid ionic groups, or salts or derivatives thereof, are preferred. The polyester may contain other ionic groups in addition to the sulfonated groups.

In the preferred embodiment the water dispersible polyester ionomer comprises nonionic and ionic dicarboxylic acid recurring units. In one embodiment the preferred nonionic dicarboxylic acid recurring unit is an isophthalate unit and is present in a mole fraction from approximately 0.6 to approximately 0.95, more preferably from approximately 0.7 to approximately 0.90. The ionic dicarboxylic acid recurring unit preferred in the invention is a 5-sulfoisophthalate unit and is present in a mole fraction from approximately 0.05 to 0.4, more preferably from approximately 0.1 to 0.3.

Preferred diol recurring units include one or more selected from ethylene glycol, diethylene glycol, triethylene glycol, thiodiethanol, 1,4-cyclohexanedimethanol, bisphenol A, trans-1,4-cyclohexanediol, dodecanediol, cis-exo-2,3-norbornanediol, 5-norbornene-2,2-dimethanol, hydroquinone bis(2-hydroxyethylether) and carbinol terminated polydimethylsiloxane. More preferred are diethylene glycol and 1,4-cyclohexanedimethanol.

In another embodiment the water-dispersible polyester ionomers preferred for use in this invention contain dicarboxylic acid recurring units and diol recurring units consistent with the following general formula:

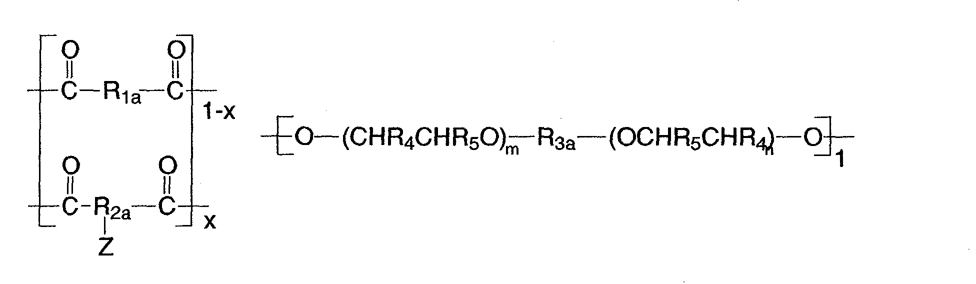

R₁ₐ represents a saturated or unsaturated divalent aliphatic, cyclic or aromatic hydrocarbon group or combinations thereof. Examples of appropriate group include 1,2-phenylene, 1,3-phenylene, 1,4-phenylene, 1,4-naphthylene, 2,6-naphthylene, 4,4'-oxydiphenylene, 1,4-cyclohexylene, 1,2-ethylene, 1,4-butylene, and the like. R₂ₐ represents the same moieties as R₁ₐ, except that it also bears the group Z. Z represents an ionic moiety derived from a sulfonic acid. x represents a mole fraction from about 0.05 to about 0.4. The dicarboxylic acid recurring units from the formula above bearing an ionic moiety derived from a sulfonic acid, i.e., 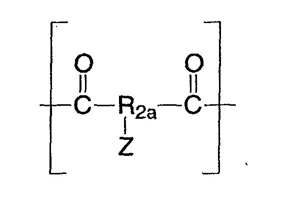 useful in the invention include the following:

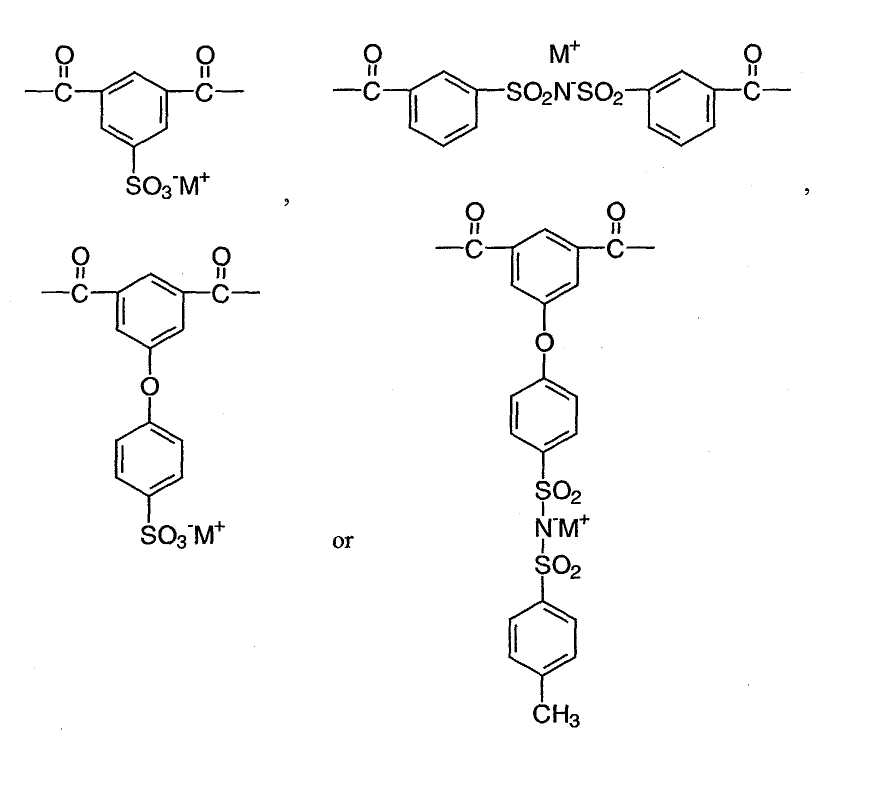

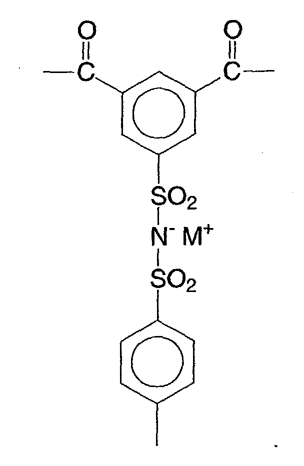

M⁺ is an appropriate cation. Examples of M⁺ include alkali metals, such as Li, Na and K; ammonium groups such as ammonium, trimethylammonium, triethylammonium, tetraalkylammonium, aryltrialkylammonium, hydroxyalkylammonium, etc.; phosphonium groups such as triphenylphosphonium and tetrabutylphosphonium; heteroaromatic ammonium groups such as pyridinium, imidazolium and N-methylammonium; sulfonium groups; guanidinium groups; and amidinium groups. M⁺ is preferably an alkali metal, for example, Na⁺.

R₃ₐ represents an alkylene group of 1 to about 16 carbon atoms; a cycloalkylene group of 5 to about 20 carbon atoms; a cyclobisalkylene group of about 8 to about 20 carbon atoms, a bi- or tri-cycloalkylene group of about 7 to about 16 carbon atoms, a bi- or tri-cyclobisalkylene group of about 9 to about 18 carbon atoms, an arenebisalkylene group of from 8 to about 20 carbon atoms or an arylene group of 6 to about 12 carbon atoms, or a carbinol-terminated polydimethylsiloxane segment. R₄ and R₅ each independently represents H, a substituted or unsubstituted alkyl group of about 1 to about 6 carbon atoms, or a substituted or unsubstituted aryl group of about 6 to about 12 carbon atoms. m and n independently represents an integer from 0-4.

Other recurring units may be incorporated into the polymer in addition to the dicarboxylic and diol recurring units described above. In addition to the dicarboxylic acid recurring units mentioned above, other carboxylic acids or their functional equivalents can be incorporated in the polyester useful for the invention. These include monocarboxylic acids such as, for example, benzoic acid, substituted benzoic acids, naphthoic acid, substituted naphthoic acids, cyclohexanecarboxylic acid, hexanoic acid, lauric acid, sulfobenzoic acid salts, etc. Other carboxylic acids or their functional equivalents include maleic acid, fumaric acid, citraconic acid, itaconic acid, mesaconic acid, and other carboxylic acids containing ethylenic unsaturation. Still other carboxylic acids or their functional equivalents are pyromellitic acid, trimellitic acid, trimesic acid, and other polycarboxylic acids.

In addition to the diol recurring units mentioned above, other hydroxy-containing compounds or their functional equivalents can be incorporated in the polyester useful for the invention. These include phenols, hydroxybenzoic acid, cyclohexanol, lauryl alcohol, alcohols or diols containing ethylenic unsaturation, and polyols such as glycerol, trimethylol propane, and pentaerythritol.

Examples of water dispersible polyesters useful in the invention include Eastman AQ® polyesters, (Eastman Chemical Company). Eastman Polyesters AQ 29, AQ 38, and AQ 55 are composed of varying amounts of isophthalic acid, sodium sulfoisophthalic acid, diethylene glycol, and 1,4-cyclohexanedimethanol, and the ionic mole % are approximately 11%, 11%, and 18 % respectively. These thermoplastic, amorphous, ionic polyesters are prepared by a melt-phase condensation polymerization at high temperature and low pressure, and the molten product is extruded into small pellets. The solid polymer disperses readily in water at 70°C with minimal agitation to give translucent, low viscosity dispersions containing no added surfactants or solvents. Varying the amount of ionic monomers, i.e., sulfoisophthalic acid, can control the particle size, which is normally from approximately 0.01 to 0.1 µm. The water dispersible sulfonated polyester used in the current invention is present in the inkjet ink generally from 0.5% to about 10% by weight.

A humectant is employed in the inkjet composition of the invention to help prevent the ink from drying out or crusting in the orifices of the printhead. Examples of humectants which can be used include polyhydric alcohols, such as ethylene glycol, diethylene glycol, triethylene glycol, propylene glycol, tetraethylene glycol, polyethylene glycol, glycerol, 2-methyl-2,4-pentanediol, 1,2,6-hexanetriol and thioglycol; lower alkyl mono- or di-ethers derived from alkylene glycols, such as ethylene glycol mono-methyl or mono-ethyl ether, diethylene glycol mono-methyl or mono-ethyl ether, propylene glycol mono-methyl or mono-ethyl ether, triethylene glycol mono-methyl or mono-ethyl ether, diethylene glycol di-methyl or di-ethyl ether, and diethylene glycol monobutylether; nitrogen-containing cyclic compounds, such as pyrrolidone, N-methyl-2-pyrrolidone, and 1,3-dimethyl-2-imidazolidinone; and sulfur-containing compounds such as dimethyl sulfoxide and tetramethylene sulfone. A preferred humectant for the composition of the invention is diethylene glycol, glycerol, or diethylene glycol monobutylether.

Water-miscible organic solvents may also be added to the aqueous ink of the invention to help the ink penetrate the receiving substrate, especially when the substrate is a highly sized paper. Examples of such solvents include alcohols, such as methyl alcohol, ethyl alcohol, n-propyl alcohol, isopropyl alcohol, n-butyl alcohol, sec-butyl alcohol, t-butyl alcohol, isobutyl alcohol, furfuryl alcohol, and tetrahydrofurfuryl alcohol; ketones or ketoalcohols such as acetone, methyl ethyl ketone and diacetone alcohol; ethers, such as tetrahydrofuran and dioxane; and esters, such as ethyl lactate, ethylene carbonate, and propylene carbonate.

Surfactants may be added to adjust the surface tension of the ink to an appropriate level. The surfactants may be anionic, cationic, amphoteric or nonionic. A biocide may be added to the ink composition of the invention to suppress the growth of microorganisms such as molds, fungi, etc. in aqueous inks. A preferred biocide for the ink composition of the present invention is Proxel® GXL (Zeneca Specialties Co.) at a final concentration of 0.0001-0.5 wt. %. Additional additives which may optionally be present in the inkjet ink composition of the invention include thickeners, conductivity enhancing agents, anti-kogation agents, drying agents, and defoamers.

The pH of the aqueous ink compositions of the invention may be adjusted by the addition of organic or inorganic acids or bases. Useful inks may have a preferred pH of from about 2 to 10, depending upon the type of dye being used. Typical inorganic acids include hydrochloric, phosphoric and sulfuric acids. Typical organic acids include methanesulfonic, acetic and lactic acids. Typical inorganic bases include alkali metal hydroxides and carbonates. Typical organic bases include ammonia, triethanolamine and tetramethylethylenediamine.

The inkjet inks provided by this invention may be employed in inkjet printing wherein liquid ink drops are applied in a controlled fashion to an ink receptive layer substrate, by ejecting ink droplets from a plurality of nozzles or orifices of the print head of an inkjet printer.

Ink-receptive substrates useful in inkjet printing are well known to those skilled in the art. Representative examples of such substrates are disclosed in U.S. Patents 5,605,750; 5,723,211; and 5,789,070 and EP 813 978 A1.

The following examples are intended to illustrate the utility of the present invention, but are not intended to limit the scope of the invention.

### EXAMPLES

The following dyes shown in Table 1 were used in the Example:

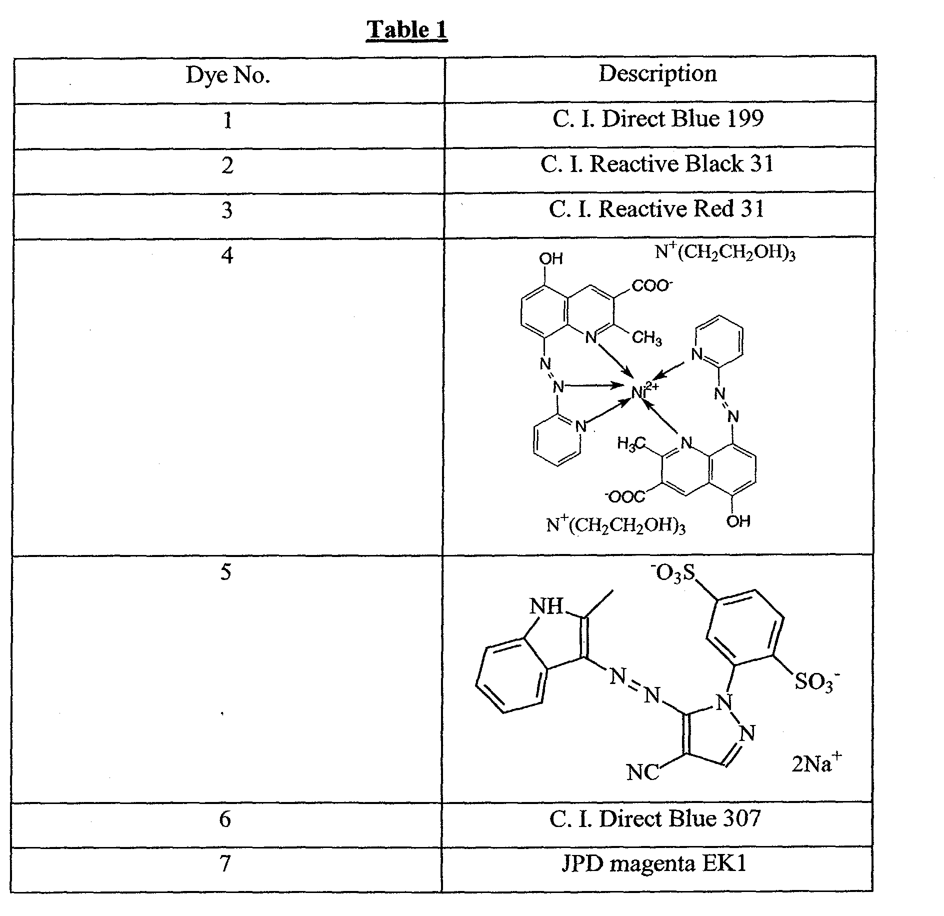

Characterizations of the polyester materials used in the following examples were obtained by the following tests or analytical techniques:

### Glass Transition Temperature and Melting Temperature

Both glass transition temperature (Tg) and melting temperature (Tm) of the dry polymer material were determined by differential scanning calorimetry (DSC), using a ramping rate of 20°C/minute. Tg is defined herein as the inflection point of the glass transition and Tm is defined herein as the peak of the melting transition.

### Particle Size Measurement

All particles were characterized by MICROTRAC II Ultrafine particle analyzer (UPA) manufactured by Leeds & Northrup. The data reported are the size that 50% of the volume in the sample are particles that are smaller than the indicated size, which is also known as the median diameter.

### Polymer Preparation

P-1: Preparation of poly[2,2'-oxydiethylene isophthalate-co-5-sodiosulfoisophthalate (80/20)] dispersion A 250-mL long-necked round-bottomed flask was charged with 17.77 g of dimethyl 5-sulfoisophthalate sodium salt, 46.61 g of dimethyl isophthalate, 44.57 g of diethylene glycol, 0.49 g of sodium acetate, and 0.06 g of Irganox 1010®. The flask was fitted with a sidearm adapter and a N₂ inlet tube extending to the bottom of the flask. The adapter was connected to a condenser and receiver. The flask was placed in a salt bath at 200°C under a gentle N₂ flow. When the reaction mixture had melted, 2 drops of titanium isopropoxide was added. The temperature of the reaction mixture was raised to 240°C over approximately 3 hr, by which time methanol had stopped distilling. The N₂ inlet tube was replaced with a mechanical stirrer, and the pressure inside the flask was reduced to approximately 0.02 torr over about 1 hr. The polymerization mixture was stirred slowly at this temperature and pressure for approximately 1.5 hr. The copolymer was allowed to cool under a N₂ atmosphere, and then the solid polymer was broken out of the flask.

A 250-mL 3-necked round-bottomed flask fitted with a mechanical stirrer and reflux condenser was charged with 50 mL of deionized water and heated to 85 - 90°C. With rapid stirring, 21.4 g of the polyester ionomer above was added gradually and the dispersion was heated at 85 - 90°C for approximately 2 hr. The heat was removed, and the dispersion was stirred at room temperature overnight. The mixture was filtered, affording a slightly hazy dispersion containing 30.2 wt% polymer.

P-2: Preparation of poly[2,2'-oxydiethylene isophthalate-co-5-sodiosulfoisophthalate (60/40)] dispersion The polyester was prepared the same as P-1, except that 35.55 g of dimethyl 5-sulfoisophthalate sodium salt, 34.95 g of dimethyl isophthalate, and 0.98 g of sodium acetate were used. The polyester was dispersed the same as polyester P-1, affording a slightly hazy dispersion containing 30.1 wt% polymer.

P-3 Preparation of poly[2,2'-oxydiethylene isophthalate-co-5-sodiosulfoisophthalate (50/50)] dispersion The polyester was prepared the same as P-1, except that 44.43 g of dimethyl 5-sulfoisophthalate sodium salt, 29.13 g of dimethyl isophthalate, and 1.23 g of sodium acetate were used. The polyester was dispersed the same as polyester P-1, affording a slightly hazy dispersion containing 30.7 wt% polymer.

P-4: Preparation of poly[2,2'-oxydiethylene-co-1,4-cyclohexanedimethylene (20/80) isophthalate-co-5-sodiosulfoisophthalate (80/20)] dispersion A 500-mL 3-necked round-bottomed flask fitted with a mechanical stirrer, efficient reflux condenser, and N₂ inlet was charged with 42.91 g of 5-sulfoisophthalic acid monosodium salt, 19.40 g of diethylene glycol, and 105.48 g of 1,4-cyclohexanedimethanol. The flask was placed in a salt bath at 220°C under a slight N₂ flow and with slow stirring. When the reaction mixture had mostly melted, 0.7 g of Fascat 4100® catalyst was added. When the melt became clear, 106.32 g of isophthalic acid was added and the polymerization was allowed to proceed until the theoretical volume of water had distilled over, a total of approximately 8 hr. The copolymer was allowed to cool under a N₂ atmosphere, and then the polymer was broken out of the flask.

A 1 L 3-necked round-bottomed flask fitted with a mechanical stirrer and reflux condenser was charged with 400 mL of deionized water and heated to 85 - 90°C. With rapid stirring, 100 g of the polyester ionomer above was added gradually and the dispersion was heated at 85 90°C for approximately 2 hr. The heat was removed, and the dispersion was stirred at room temperature overnight. The mixture was filtered, affording a slightly hazy dispersion containing 20.9 wt% polymer.

P-5: Preparation of poly[2,2'-oxydiethylene-co-1,4-cyclohexanedimethylene (20/80) isophthalate-co-5-sodiosulfoisophthalate (70/30)] dispersion The polyester was prepared the same as P-4, except that 64.36 g of 5-sulfoisophthalic acid monosodium salt and 93.03 g of isophthalic acid were used. The polyester was dispersed the same as polyester P-4, affording a slightly hazy dispersion containing 25.8 wt% polymer.

P-6:Preparation of poly[2,2'-oxydiethylene-co-1,4-cyclohexanedimethylene (20/80) isophthalate-co-5-sodiosulfoisophthalate (60/40)] dispersion The polyester was prepared the same as P-4, except that 85.81 g of 5-sulfoisophthalic acid monosodium salt and 79.74 g of isophthalic acid were used. The polyester was dispersed the same as polyester P-4, affording a slightly hazy dispersion containing 26.5 wt% polymer.

P-7: (Preparation of poly[2,2'-oxydiethylene-co-1,4-cyclohexanedimethylene (20/80) isophthalate-co-5-sodiosulfoisophthalate (40/60)] dispersion The polyester was prepared the same as P-4, except that 128.72 g of 5-sulfoisophthalic acid monosodium salt and 53.16 g of isophthalic acid were used. The polyester was dispersed the same as polyester P-4, affording a slightly hazy dispersion containing 20.6 wt% polymer.

P-8: (Preparation of poly[2,2'-oxydiethylene-co-1,4-cyclohexanedimethylene (57/43) isophthalate-co-5-sodiosulfoisophthalate (90/10)] dispersion The polyester was prepared the same as P-1, except that 8.89 g of dimethyl 5-sulfoisophthalate sodium salt, 52.43 g of dimethyl isophthalate, 25.41 g of diethylene glycol, 18.60 g of 1,4-cyclohexanedimethanol, and 0.25 g of sodium acetate were used. The polyester was dispersed the same as polyester P-1, affording a hazy dispersion containing 20.9 wt% polymer.

AQ55 dispersion An AQ55® dispersion was commercially available from Eastman Chemical Co., and was used as received at 28% solids by weight. The ionic group content was ∼18 mol %. The Tg was 55°C as measured by DSC and particle size was 20 nm as measured by UPA.

AQ29 dispersion An AQ29® dispersion was commercially available from Eastman Chemical Co., and was used as received at 28% solids by weight. The ionic group content was ∼11 mol %. The Tg was 29°C as measured by DSC.

### Ink preparation

The following inks were prepared and listed in Table 2.

**Table 2**

| Ink | Dye No | Polyester No. |
|---|---|---|
| C-1 | 1 | |
| I-1 | 1 | AQ55 |
| I-2 | 1 | AQ29 |
| I-3 | 1 | P-8 |
| C-2 | 1 | P-3 |
| I-4 | 1 | P-1 |
| I-5 | 1 | P-2 |
| C-3 | 1 | P-7 |
| I-6 | 1 | P-4 |
| I-7 | 1 | P-5 |
| I-8 | 1 | P-6 |
| C-4 | 2 | |
| I-9 | 2 | AQ55 |
| C-5 | 3 | |
| I-10 | 3 | AQ55 |
| C-6 | 4 | |
| I-11 | 4 | AQ55 |
| C-7 | 5 | |
| I-12 | 5 | AQ55 |
| C-8 | 6 | |
| I-13 | 6 | AQ55 |
| C-9 | 7 | |
| I-14 | 7 | AQ55 |

### Comparative Ink C-1

To prepare comparative inkjet ink, 12.0 g of Dye 1 (10% active), 0.12 g Surfynol® 465 (from Air Products), 7.0 g glycerol, 4.0 g diethylene glycol, 2.40 g diethyleneglycol monobutyl ether (Dowanol® DB) were added to distilled water to make 40 g of ink. The final ink contained 3.0% dye, 0.30% Surfynol® *465,* 17.5% glycerol, 10% diethylene glycol and 6% Dowanol DB. The solution was filtered through a 3 µm polytetrafluoroethylene filter and filled into an Epson SO2008 inkjet cartridge.

### Comparative Ink C-2

This ink was prepared similar to Comparative Ink C-1 except that 8.0 g of polyester P-3 (25% active) was added in addition to the ink such that the ink also contained 5% of P-3.

### Comparative Ink C-3

This ink was prepared similar to Comparative Ink C-2 except that Polyester P-7 was used instead of Polyester P-3.

### Comparative Ink C-4

This ink was prepared similar to Comparative Ink C-1 except that Dye 2 was used instead of Dye 1 such that the final ink contains 4.5% of Dye 2.

### Comparative Ink C-5

This ink was prepared similar to Comparative Ink C-1 except that Dye 3 was used instead of Dye 1 such that the final ink contains 3.8% of Dye 3.

### Comparative Ink C-6

This ink was prepared similar to Comparative Ink C-1 except that Dye 4 was used instead of Dye 1 such that the final ink contains 0.55% of Dye 4.

### Comparative Ink C-7

This ink was prepared similar to Comparative Ink C-1 except that Dye 5 was used instead of Dye 1 such that the final ink contains 3.75% of Dye 5.

### Comparative Ink C-8

This ink was prepared similar to Comparative Ink C-1 except that Dye 6 was used instead of Dye 1 such that the final ink contains 3.6% of Dye 6.

### Comparative Ink C-9

This ink was prepared similar to Comparative Ink C-1 except that Dye 7 was used instead of Dye 1 such that the final ink contains 3.8% of Dye 7.

### Ink 1 of the Invention I-1

An ink similar to Comparative Ink 1 was prepared except that Dye 1 and AQ55® dispersion was used instead of Dye 1 alone. To prepare this ink, 12.0 g of Dye 1 (10% active), 7.14g of AQ55® dispersion (28% by weight), 0.12g Surfynol® 465 (from Air Products), 7.0 g glycerol, 4.0 g diethylene glycol, and 2.40 g diethyleneglycol monobutyl ether (Dowanol® DB) were added to distilled water to make 40.0 g of ink. The final ink contained 3.0% dye, 5% AQ55®, 0.30% Surfynol® 465, 17.5% glycerol, 10% diethylene glycol and 6% Dowanol DB. The solution was filtered through a 3 µm polytetrafluoroethylene filter and filled into an Epson SO20089 inkjet cartridge.

### Ink 2 of the Invention I-2

An ink similar to Ink I-1 was prepared except that polyester AQ29® was used instead of polyester AQ55®.

### Ink 3 of the Invention I-3

An ink similar to Ink I-1 was prepared except that polyester P-8 was used instead of polyester AQ55®.

### Ink 4 of the Invention I-4

An ink similar to Ink I-1 was prepared except that polyester P-1 was used instead of polyester AQ55®.

### Ink 5 of the Invention I-5

An ink similar to Ink I-1 was prepared except that polyester P-2 was used instead of polyester AQ55®.

### Ink 6 of the Invention I-6

An ink similar to Ink I-1 was prepared except that polyester P-4 was used instead of polyester AQ55®.

### Ink 7 of the Invention I-7

An ink similar to Ink I-1 was prepared except that polyester P-5 was used instead of polyester AQ55®.

### Ink 8 of the Invention I-8

An ink similar to Ink I-1 was prepared except that polyester P- 6 was used instead of polyester AQ55®.

### Ink 9 of the Invention I-9

This ink was prepared similar to Ink I-1 except that Dye 2 was used instead of Dye 1 such that the final ink contains 4.5% of Dye 2.

### Ink 10 of the Invention I-10

This ink was prepared similar to Ink I-1 except that Dye 3 was used instead of Dye 1 such that the final ink contains 3.8% of Dye 3.

### Ink 11 of the Invention I-11

This ink was prepared similar to Ink I-1 except that Dye 4 was used instead of Dye 1 such that the final ink contains 0.55% of Dye 4.

### Ink 12 of the Invention I-12

This ink was prepared similar to Ink I-1 except that Dye 5 was used instead of Dye 1 such that the final ink contains 3.75% of Dye 5.

### Ink 13 of the Invention I-13

This ink was prepared similar to Ink I-1 except that Dye 6 was used instead of Dye 1 such that the final ink contains 3.6% of Dye 6.

### Ink 14 of the Invention I-14

This ink was prepared similar to Ink I-1 except that Dye 7 was used instead of Dye 1 such that the final ink contains 3.8% of Dye 7.

### Printing

Elements were prepared using test images consisting of a series of 5 variable density patches, approximately 15 by 13 mm in size, ranging from 0% dot coverage to 100% dot coverage printed onto commercially available Epson Premium Glossy Paper, Cat. No SO41286, with an EPSON 660 inkjet printer, using the above inks. The elements were allowed to dry for 24 hours at ambient temperature and humidity.

### Stability Tests

The above elements were then subjected to high intensity daylight irradiation (50 Klux) for two weeks. Additional elements were then placed in an ozone chamber (∼5 ppm ozone level, 50% relative humidity) for 24 hours. The Status A reflection densities of the 75% dot coverage density of the elements were measured using an X-Rite® 414 densitometer before and after the light and ozone fade test. The percentages of the Status A densities retained for the 75% dot coverage patches were calculated and are listed in Table 3.

**Table 3**

| Element Containing Ink | Polyester Ionic Content (mol %) | Light Test (% Retained) | Ozone Test (% Retained) |
|---|---|---|---|
| C-1 | | 83 | 43 |
| C-2 | 50 | 79 | 42 |
| C-3 | 60 | 80 | 43 |
| I-1 | 18 | 93 | 66 |
| I-2 | 11 | 94 | 83 |
| I-3 | 10 | 94 | 78 |
| I-4 | 20 | 90 | 59 |
| I-5 | 40 | 82 | 54 |
| I-6 | 20 | 90 | 60 |
| I-7 | 30 | 88 | 58 |
| I-8 | 40 | 85 | 52 |
| C-4 | | 71 | 25 |
| I-9 | 18 | 88 | 69 |
| C-5 | | 69 | 65 |
| I-10 | 18 | 67 | 91 |
| C-6 | | 24 | 7 |
| I-11 | 18 | 56 | 28 |
| C-7 | | 65 | 13 |
| I-12 | 18 | 75 | 29 |
| C-8 | | 88 | 48 |
| I-13 | 18 | 97 | 85 |
| C-9 | | 79 | 79 |
| I-14 | 18 | 77 | 89 |

The above results in Table 3 show that the elements of the invention had improved lightfastness and/or ozone stability as compared to the control elements.

## Claims

1. An inkjet ink composition comprising water, a water soluble dye and a water-dispersible sulfonated polyester ionomer containing sulfonated groups in the range of 5 to 40 mol % of the total polyester.

2. The inkjet ink composition of claim 1 wherein the anionic water soluble dye is a mono or poly azo dye; a metal-complex dye, a phthalocyanine dye, an anthraquinone dye, or an anthrapyridone dye.

3. The inkjet ink composition of claim 2 wherein the anionic water soluble dye is a sulfonated or sulfonic acid derivative of the anthrapyridone dye represented by Formula I 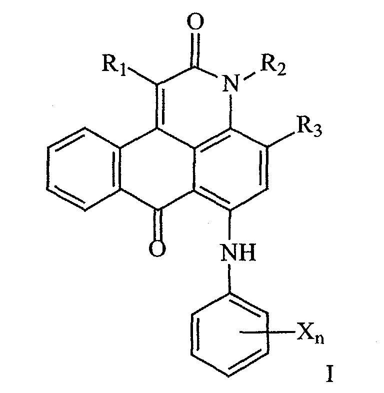 wherein:
R₁ represents hydrogen, or a substituted or unsubstituted alkoxycarbonyl, carboxyl, benzoyl, alkyl, aryl, hetaryl, alkoxy or phenoxy group;
R₂ represents hydrogen or a substituted or unsubstituted alkyl, alicyclic, aryl or hetaryl group;
R₃ represents hydrogen, carboxyl, or a substituted or unsubstituted alkyl, alicyclic, aryl, hetaryl, alkoxy or phenoxy group;
each X independently represents hydrogen, halogen, nitro, hydroxyl, carboxyl, or a substituted or unsubstituted alkyl, alicyclic, aryl, hetaryl, alkoxy, phenoxy, amino, amido or sulfonamido group; and
n represents 0, 1, 2 or 3.

4. The inkjet ink composition of claims 1 to 3 wherein the water is the continuous phase and the polyester ionomer is the dispersed phase.

5. The inkjet ink composition of claim 4 wherein the polyester dispersion has an average particle size of < 0.5 µm.

6. The inkjet ink composition of claim 5 wherein the polyester dispersion has an average particle size of< 0.05 µm.

7. The inkjet ink composition of claims 1 to 6 wherein the water-dispersible polyester ionomer is a hydrophobic, amorphous, thermoplastic polymer in which sulfonated ionic groups or moieties are present in sufficient concentration to provide water dispersibility.

8. The inkjet ink composition of claims 1 to 7 wherein the water-dispersible polyester ionomer comprises dicarboxylic acid recurring units derived from dicarboxylic acids or their functional equivalents, and diol recurring units derived from diols or their functional equivalents, and wherein the sulfonated ionic moieties are contained in either the diol recurring units and/or the dicarboxylic acid recurring units.

9. The inkjet ink composition of claims 1 to 8 wherein the water-dispersible polyester ionomer comprises nonionic and ionic dicarboxylic acid recurring units, said nonionic dicarboxylic acid recurring units being isophthalate units present in a mole fraction from approximately 0.6 to approximately 0.95; and said ionic dicarboxylic acid recurring unit being 5-sulfoisophthalate units present in a mole fraction from approximately 0.05 to approximately 0.4.

10. The inkjet ink composition of claim 9 wherein the diol recurring units are ethylene glycol, diethylene glycol, triethylene glycol, thiodiethanol, 1,4-cyclohexanedimethanol, bisphenol A, trans-1,4-cyclohexanediol, dodecanediol, cis-exo-2,3-norbomanediol, 5-norbornene-2,2-dimethanol, hydroquinone bis(2-hydroxyethylether) or carbinol terminated polydimethylsiloxane.

11. The inkjet ink composition of claims 1 to 10 wherein the water-dispersible polyester ionomer is represented by Formula II: 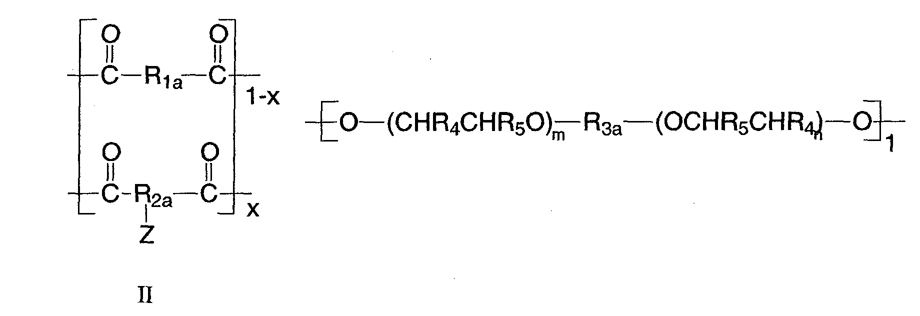 wherein:
R₁ₐ and R₂ₐ independently represents a saturated or unsaturated divalent aliphatic, cyclic or aromatic hydrocarbon group or combinations thereof;
Z represents an ionic moiety derived from a sulfonic acid;
x represents a mole fraction from about 0.05 to about 0.4;
R₃ₐ represents an alkylene group of 1 to about 16 carbon atoms; a cycloalkylene group of 5 to about 20 carbon atoms; a cyclobisalkylene group of about 8 to about 20 carbon atoms, a bi- or tri-cycloalkylene group of about 7 to about 16 carbon atoms, a bi- or tri-cyclobisalkylene group of about 9 to about 18 carbon atoms, an arenebisalkylene group of from 8 to about 20 carbon atoms, an arylene group of 6 to about 12 carbon atoms, or a carbinol-terminated polydimethylsiloxane segment;
R₄ and R₅ each independently represents H, a substituted or unsubstituted alkyl group of about 1 to about 6 carbon atoms, or a substituted or unsubstituted aryl group of about 6 to about 12 carbon atoms;
m and n independently represents an integer of 0 to 4.
